# EUROPEAN PATENT APPLICATION

(11) **EP 2 299 298 A1**
(43) Date of publication of application: **23.03.2011**
(21) Application number: 09797747.4
(22) Date of filing: 09.04.2009
(51) Int. Cl.: G02B 5/20, G02F 1/1335, G02F 1/1339

(54) **COLOR FILTER SUBSTRATE AND LIQUID CRYSTAL DISPLAY DEVICE**

(30) Priority: 15.07.2008 JP 2008183637
(71) Applicant: Sharp Kabushiki Kaisha, Osaka-shi, Osaka 545-8522 (JP)
(72) Inventor: KOHARA, Yasuhiro, Osaka-shi Osaka 545-8522 (JP); SAKATA, Tohru, Osaka-shi Osaka 545-8522 (JP); NISHIUCHI, Makoto, Osaka-shi Osaka 545-8522 (JP)
(74) Representative: Treeby, Philip David William
(86) International application number: PCT/JP2009/057271
(87) International publication number: WO 2010/007819

(57) **Abstract**

The present invention provides a color filter substrate and a liquid crystal display device that allow suppressing the occurrence of liquid crystal alignment disorder in the vicinity of stack spacers without increasing the number of processes, even in a case where a colored layer is used as a base of the stack spacers. The color filter substrate of the present invention has a first pixel colored layer, a light-shielding layer and a second pixel colored layer that are disposed side by side on a substrate, wherein the light-shielding layer has a first wide portion and is disposed so as to partially overlap edges of the first pixel colored layer and the second pixel colored layer; the first wide portion includes a projection that projects towards the first pixel colored layer; the color filter substrate has a first stack spacer including the first wide portion and a first spacer colored layer; and the first spacer colored layer has the same color as the first pixel colored layer and is joined to the first pixel colored layer only at a root of the projection.

## Description

### TECHNICAL FIELD

The present invention relates to a color filter substrate and a liquid crystal display device. More specifically, the present invention relates to a color filter substrate suitable for a liquid crystal display device that is provided with stack spacers, and to a liquid crystal display device provided with such a color filter substrate.

### BACKGROUND ART

Color filter substrates are members having, for instance, red (R), blue (B) and green (G) colored layers and which fulfill the role of color display in display devices such as liquid crystal display devices. In liquid crystal display devices, display is carried out through control of the optical characteristics of light emitted from a light source through the use of a liquid crystal layer or the like that is filled into a liquid crystal display panel. Ordinarily, the liquid crystal display device has an active matrix substrate, a color filter substrate, and a liquid crystal layer sandwiched therebetween, such that the thickness (cell gap) of the liquid crystal layer is maintained by way of spacers disposed between the substrates.

Known spacers include spherical spacers and columnar spacers, of respective dissimilar shapes. Preferably, the spacers are selectively disposed on a light-shielding portion at which there is formed a light-shielding layer such as a black matrix (BM) or the like, so as not to impair display quality of the liquid crystal display device. Ordinarily, spherical spacers are disposed spread over a substrate, and hence positioning of the spacers at desired positions requires high-precision control techniques. By contrast, columnar spacers can be formed directly on a substrate, for instance by photolithography or the like, using a resin layer such as a photosensitive resin, and are superior in that they can be arranged with high precision. Such stack spacers formed by above photolithography are also called photospacers (PS). In some embodiments of columnar spacers, the latter are also referred to as stack spacers that comprise a stack of known members such as a light-shielding layer, a colored layer and the like. Known technologies relating to stacking of light-shielding layers and colored layers, as in the above-mentioned stack spacers, include a method wherein an operation of repairing pinholes occurring in a black matrix can be omitted by arranging, on the black matrix, a colored pattern layer that comprises a blue pigment having a shorter wavelength and a lower specific visibility that those of green and red hues, whereby the blue pigment elicits the effect of rendering small pinholes unnoticeable (for instance, see Patent document 1).

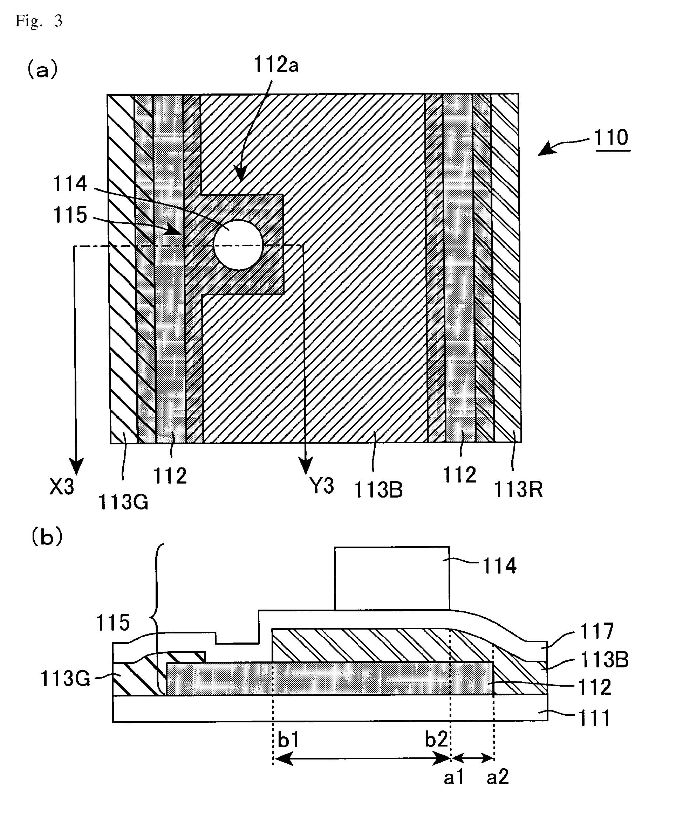

An example of the configuration of a color filter substrate provided in a conventional liquid crystal display device will be explained next with reference to accompanying drawings. Fig. 3 is a schematic diagram illustrating a color filter substrate provided in a conventional liquid crystal display device, wherein (a) illustrates a plan-view diagram and (b) is a cross-sectional diagram of (a) along line X3-Y3. The conventional color filter substrate 110 comprises a transparent substrate 111, and thereon, a black matrix 112 which is a light-shielding layer, a pixel colored layer (red) 113R, a pixel colored layer (green) 113G, a pixel colored layer (blue) 113B, a common electrode 117, a stack spacer 115 and an alignment layer. The pixel colored layer (red) 113R, the pixel colored layer (green) 113G and the pixel colored layer (blue) 113B are disposed side by side on a plane in accordance with each color of each pixel.
The stack spacer 115 has a structure in which there are stacked the black matrix 112, the pixel colored layer (blue) 113B, the common electrode 117 and a columnar portion 114. The alignment layer is subjected to a rubbing treatment in order to control the alignment of the liquid crystal. The black matrix 112 has a plurality of pixel openings (display effective regions). The region at which the black matrix 112 is disposed constitutes a light-shielding portion (display ineffective region). When a pixel opening is located at a region where no pixel colored layer is disposed, chromaticity deviates from a predetermined chromaticity of the pixel colored layer due to light, from a light source, that passes through such a region. This detracts from the display quality of the liquid crystal display device. Therefore, the edges of the light-shielding layer on the side of the display effective region are ordinarily disposed so as to overlap the colored layers. Such being the case, the pixel colored layer (red) 113R, the pixel colored layer (green) 113G and the pixel colored layer (blue) 113B are each disposed at a corresponding pixel opening of the black matrix 112. The pixel colored layer (red) 113R, the pixel colored layer (green) 113G and the pixel colored layer (blue) 113B are disposed so as to overlap the edges of the black matrix 112. From the viewpoint of suppressing light leakage from the stack spacer 115, the black matrix 112 has, in a plan view of the substrate 111, a wide portion that projects into a pixel opening, such that the width of the wide portion is relatively wider than that of other portions. The stack spacer 115 is disposed on a projection 112a at which the wide portion projects. Therefore, the projection 112a of the black matrix 112 functions also as a base of the stack spacer 115.

When the color filter substrate is used in a liquid crystal display device, steps in the color filter substrate give rise to liquid crystal alignment disorder. If the portion of the liquid crystal at which liquid crystal alignment disorder occurs is positioned at a pixel opening, light leaks from that portion, and contrast decreases. Therefore, the difference in level of steps in the color filter substrate must be reduced in terms of improving the display quality of the liquid crystal display device. Twisted nematic (TN)-mode liquid crystal display devices, in particular, are readily susceptible to liquid crystal alignment disorder.

Such being the case, methods have been proposed (for instance, see Patent document 2) in which an organic insulating film and an inorganic insulating film are formed between a colored layer and a transparent conductive film, as a means for suppressing drops in coverage of a transparent conductive film due to steps in a color filter substrate. Technologies for reducing steps in a color filter substrate include: for instance, a method of canceling a step in a colored layer that is parallel to gate wiring, by making the color array parallel to gate wiring and by continuously patterning a color filter colored layer pattern, (for instance, see Patent document 3); and a color filter substrate for liquid crystal display devices, comprising a light-shielding layer having an opening; a colored layer formed on an opening of the light-shielding layer and on the light-shielding layer around the opening; and a transparent planarized film provided on the light-shielding layer and the colored layer, wherein the thickness of the light-shielding layer is greater than that of the colored layer, and the difference between the maximum height of the top face of a transparent planarized layer formed on the light-shielding layer around the opening, and the minimum height of the top face of the transparent planarized layer formed on the opening is prescribed to be no greater than 0.2 µm, to improve thereby steps in the opening that arise due to colored layer steps in the light-shielding layer (for instance, see Patent document 4). As techniques for restricting rubbing anomalies caused by steps in color filter substrates, methods are also disclosed in which a spacer is standingly provided on a spacer base that stands apart from a colored layer which is provided so as to cover a light-transmitting portion of a light-shielding layer (for instance, see Patent document 5).

Patent document 1: Japanese Kokai Publication H6-308478
Patent document 2: Japanese Kokai Publication H2-308105
Patent document 3: Japanese Kokai Publication H5-34680 A
Patent document 4: Japanese Kokai Publication 2007-577762
Patent document 5: Japanese Kokai Publication 2007-171620

In the conventional color filter substrate 110 illustrated in Fig. 3, the pixel colored layer (red) 113R, the pixel colored layer (green) 113G and the pixel colored layer (blue) 113B are ordinarily formed using a resin material in the form of a liquid resist, a film resist or the like. In such cases, the thickness of, for instance, the pixel colored layer (green) 113G at the portion disposed on the black matrix 112 is ordinarily smaller than the thickness of the pixel colored layer (green) 113G at the portion disposed on the pixel opening, as in the pixel colored layer (green) 113G illustrated in Fig. 3. However, when using also, as the base of the stack spacer 115, a portion provided on the projection 112a, being a portion of the pixel colored layer that is in contact with the projection 112a, as in the case of the pixel colored layer (blue) 113B, the thickness of the pixel colored layer at the portion disposed on the projection 112a was unlikely to be thin. As a result, a large step in the pixel colored layer due to the projection 112a arises on the pixel opening side,. The same problem occurs when the pixel colored layer that is in contact with the projection 112a is of a color other than blue. Therefore, a large step arises in the pixel colored layer, on the pixel opening side, in the vicinity of the stack spacer, if the pixel colored layer is used as the base of the stack spacer, as in the case of the color filter substrate 110. The resulting large step in the color filter substrate is a factor that gives rise to liquid crystal alignment disorder. More specifically, firstly, if an alignment layer is formed on the color filter substrate, the step in the color filter substrate makes it difficult to impart a rubbing treatment homogeneously to the entire alignment layer. Secondly, there arises a difference between the alignability of the liquid crystal at the portion of the color filter substrate at which the step is formed and alignability at other portions. The above factors give rise to liquid crystal alignment disorder in the vicinity of the stack spacers when such color filter substrates are used in liquid crystal display devices. For instance, light leakage is known to occur due to liquid crystal alignment disorder, whereby contrast is impaired, in the manufacture of TN-mode liquid crystal display devices using conventional color filter substrates provided with such stack spacers.

The method of Patent document 2 reduces the difference in level of steps of a colored layer along gate wiring, but not the difference in level of steps in the vicinity of stack spacers. The methods of Patent documents 1 and 3 involved an additional film for reducing steps in pixel colored layers, which entailed a greater number of processes. The above methods leave thus room for improvement.

### DISCLOSURE OF THE INVENTION

In the light of the above, it is an object of the present invention to provide a color filter substrate and a liquid crystal display device that allow suppressing the occurrence of liquid crystal alignment disorder in the vicinity of stack spacers, without increasing the number of processes, in a case where a colored layer is used as a base of the stack spacers.

The inventors carried out various studies on color filter substrates and liquid crystal display devices that should allow suppressing the occurrence of liquid crystal alignment disorder in the vicinity of stack spacers, without increasing the number of processes, in a case where a colored layer is used as a base of the stack spacers, and came to focus on the longitudinal and transversal widths of the regions at which there overlap the light-shielding layers and colored layers that make up bases of stack spacers. As a result of the above studies, the inventors found that upon stacking of a colored layer and a light-shielding layer on a substrate, the thickness of the layer disposed on the upper-layer side depends on the longitudinal and transversal widths at the region at which the colored layer and the light-shielding layer overlap.

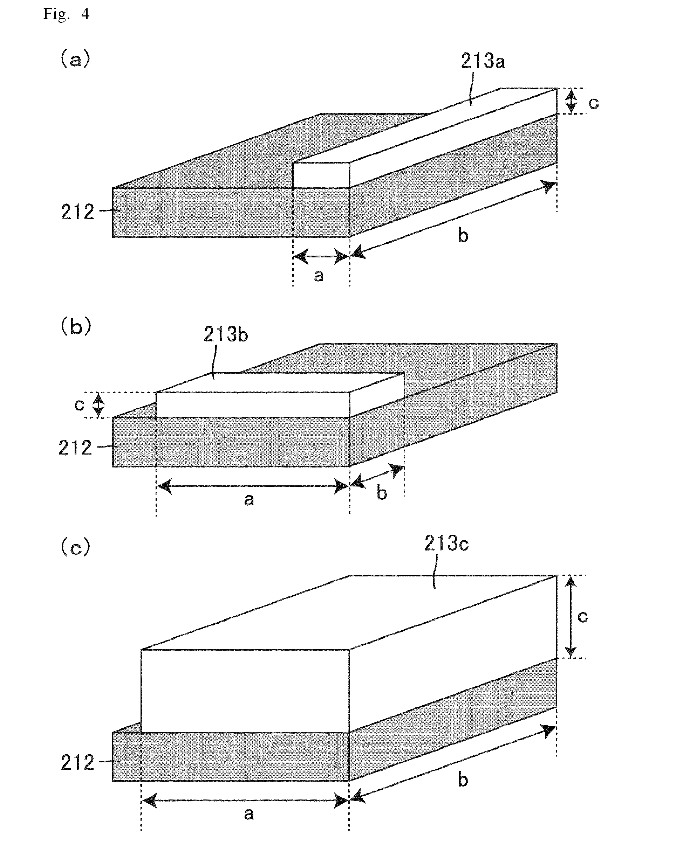

An explanation follows next, with reference to accompanying drawings, on the above feature where the thickness of the layer disposed on the upper-layer side depends on the longitudinal and transversal widths of the region at which the colored layer and the light-shielding layer overlap, upon stacking of a colored layer and a light-shielding layer on a substrate. Figs. 4(a) to (c) are perspective-view schematic diagrams illustrating the vicinity of the edge of a black matrix having the edge of a colored layer stacked thereon. An edge 213a of a colored layer overlapping an edge of the black matrix 212 illustrated in Fig. 4(a) has a small transversal width a and a large longitudinal width b. An edge 213b of a colored layer overlapping an edge of the black matrix 212 illustrated in Fig. 4(b) has a large transversal width a and a small longitudinal width b. An edge 213c of a colored layer overlapping an edge of the black matrix 212 illustrated in Fig. 4(c) has a large transversal width a and a large longitudinal width b. A comparison of the thickness c of the edges 213a, 213b, 213c of such a colored layer reveals that, at the edges 213a, 213b, the colored layer has a thickness c smaller than the thickness of the colored layer at portions where the colored layer does not overlap the black matrix 212. At the edge 213c of the colored layer having a large transversal width a and a longitudinal width b, however, the thickness c is not small, but about the same as the thickness of the colored layer at portions where the latter does not overlap the black matrix 212. The inventors found that the thickness of the colored layer at portions overlapping the black matrix is lower in a case where the colored layer overlaps the black matrix in one dimension (in the form of a thin strip); however, when the colored layer overlaps the black matrix in two dimensions (spread over a plane), i.e. when both the longitudinal and transversal widths at the region at which the black matrix and the colored layer overlap are large, the film-thickness reduction effect of the portion at which the colored layer and the black matrix overlap fails to be brought out. Therefore, the thickness of the colored layer at the portion of overlapping with the black matrix can be reduced by causing at least one from among the longitudinal width and the transversal width of the region at which the black matrix and the colored layer overlap to be small, as in the case of the edges 213a, 213b of the colored layer. The above relationship holds also in case that the black matrix is disposed on the colored layer.

The above relationship will be explained in detail based on the conventional color filter substrate 110 illustrated in Fig. 3. In case of using a pixel colored layer (pixel colored layer (blue) 113B in Fig. 3) that is in contact with the projection 112a at the base of the stack spacer 115, as in the conventional color filter substrate 110, the longitudinal and transversal widths at the region at which the pixel colored layer that is in contact with the projection 112a overlaps the projection 112a is likely to be large. Therefore, the thickness of the pixel colored layer (blue) 113B at the portion (portion a1-a2) disposed on the periphery of the edge of the projection 112a becomes smaller than the original thickness (thickness of the portion of the pixel colored layer (blue) 113B disposed on the pixel opening) due to the strong influence of the single layer (portion of the pixel colored layer (blue) 113B disposed on the pixel opening) that surrounds the edge of the projection 112a. By contrast, the thickness of the pixel colored layer (blue) 113B at a portion (portion b1-b2) disposed in the region (mid-peripheral region of the projection 112a) beyond the periphery of the edge of the projection 112a is about the same as the original thickness, since here the influence of the pixel colored layer (blue) 113B at the portion overlapping the projection 112a is stronger. In the conventional color filter substrate 110, a large step is likely to arise as a result in the pixel colored layer (blue) 113B, on the pixel opening side, due to the projection 112a. Therefore, it is possible to reduce the difference in level of the step in the pixel colored layer (blue) 113B, on the pixel opening side, due to the projection 112a, by reducing at least one from among the longitudinal and transversal widths at the region at which the projection 112a and the pixel colored layer (blue) 113B overlap, and by suppressing thus the formation of a thick portion, such as that of portion b1-b2.

Further study led to the finding to the effect that the longitudinal and transversal widths at the region at which the light-shielding layer and the colored layer overlap can be reduced in the stack spacer, by using, as the base of the stack spacer, a colored layer that has the same color as that of the pixel colored layer in contact with a projection included in the wide portion, and that is joined to the pixel colored layer only at the root of the projection, when the stack spacer is disposed on the wide portion of the light-shielding layer; using a colored layer that has the same color as the pixel colored layer in contact with the shorter edge from among the edges of the wide portion in contact with the pixel colored layer, and that is joined to that pixel colored layer, when the stack spacer is disposed on the wide portion of the light-shielding layer; and using, as the base of the stack spacer, a color layer that has the same color as that of the pixel colored layer disposed around the island-like light-shielding layer, and that is provided independently and spaced apart from the pixel colored layer, when the stack spacer is disposed on an island-like light-shielding layer. The present invention is arrived at on the basis of these findings, which allow solving brilliantly the above problems.

Specifically, a first invention is a color filter substrate having a first pixel colored layer, a light-shielding layer and a second pixel colored layer that are disposed side by side on a substrate; wherein the light-shielding layer has a first wide portion and is disposed so as to partially overlap edges of the first pixel colored layer and the second pixel colored layer; the first wide portion includes a projection that projects towards the first pixel colored layer; the color filter substrate has a first stack spacer including the first wide portion and a first spacer colored layer; and the first spacer colored layer has the same color as the first pixel colored layer and is joined to the first pixel colored layer only at a root of the projection.

In the first invention, the light-shielding layer overlaps the edge of the first pixel colored layer, and the first spacer colored layer is joined to the first pixel colored layer only at the root of the projection, whereby there can be reduced the longitudinal and transversal widths at the region at which the first wide portion and the first pixel colored layer overlap. This allows, as a result, reducing the thickness of the upper layer at the region at which the first wide portion and the first pixel colored layer overlap, and reducing the step in the first pixel colored layer or of the first wide portion in the vicinity of the first stack spacer. The first spacer colored layer has the same color as the first pixel colored layer, and hence the first spacer colored layer and the first pixel colored layer can be formed in one same process. If the first spacer colored layer and the first pixel colored layer are formed in separate processes, there is a ordinarily a chance of overlap between the first spacer colored layer and the first pixel colored layer or the second pixel colored layer, due to, for instance, misalignment, inaccurate finished width or the like. Concerns arise, as a result, of steps in the first wide portion, the first pixel colored layer or the second pixel colored layer in the vicinity of the first stack spacer, and of instability of the height of the base of the first stack spacer. No separate process for forming the first spacer colored layer need to be provided in the first invention. It becomes thus possible to allay the above concerns, and achieve easily a stable shape of the base of the first stack spacer. Further, there is no need for using the second pixel colored layer as a spacer colored layer, and hence the second pixel colored layer can overlap the light-shielding layer along the contour of the latter. Using a color filter substrate having a configuration such as the above in a liquid crystal display device allows suppressing the occurrence of rubbing anomalies, caused by steps in the first wide portion, the first pixel colored layer or the second pixel colored layer, in the vicinity of the first stack spacer, and allows suppressing the occurrence of differences in liquid crystal alignability at portions where steps are generated, and at other portions. It becomes possible therefore to suppress the occurrence of liquid crystal alignment disorder in the vicinity of the first stack spacer. Light leakage caused by liquid crystal alignment disorder can be suppressed as a result, and there can be realized a high contrast-ratio liquid crystal display device. A state wherein the first spacer colored layer is joined to the first pixel colored layer only at the root of the projection can be easily realized, for instance, by providing a separating portion (portion at which neither the first pixel colored layer nor the first spacer colored layer is provided) at the region overlapping the projection. Preferably, this separating portion is shaped so as to run along the edge of the projection, in a plan view. This allows, as a result, broadening the surface area of the first spacer colored layer while reducing the longitudinal and transversal widths at the region at which the first wide portion and the first pixel colored layer overlap. A member (for instance, a columnar portion formed of resin or the like) that adjusts the height of the first stack spacer can be easily formed, as a result, at the region overlapping the first spacer colored layer.

In the present description, the upper layer refers to a layer on a side further away from the substrate, and the lower layer refers to a layer on a side closer to the substrate.

So long as the above-described essential constituent elements are present, the configuration of the color filter substrate of the first invention is not particularly limited as regards the presence of other constituent elements.
A preferred embodiment of the color filter substrate of the first invention will be explained in detail further on.

The method for forming the pixel colored layer and the spacer colored layer is not particularly limited, but overlapping between the above-described pixel colored layer and the spacer colored layer can be readily achieved by photolithography or printing. Therefore, photolithography or printing can be suitably used as a way of forming the pixel colored layer and the spacer colored layer in the first invention.

The color of the colored layer used in the color filter substrate of the first invention is not particularly limited, so long as the color is a color required for color display, and may be, for instance, three colors of red (R), green (G) and blue (B) in case of additive color mixing, or three colors of cyan (C), magenta (M) and yellow (Y) in case of subtractive color mixing. The colored layer used in the color filter substrate of the first invention may be of four or more colors.

Conventional color filter substrates embodied as described below were prone, in particular, to have steps in the color filter substrate caused by the stack spacer, in cases where the base of the stack spacer had a structure that comprised a colored layer. In a case where the base of the stack spacer has a structure comprising a colored layer, therefore, using the first invention in a color filter substrate embodied as described below allows reducing, more effectively, the difference in level of steps in the color filter substrate that are caused by members comprised in the stack spacer, and allows suppressing liquid crystal alignment disorder in the vicinity of the stack spacers. That is, the above color filter substrate may not be provided with an overcoat layer that covers the first pixel colored layer, the light-shielding layer and the second pixel colored layer, and the light-shielding layer may contain a resin.

There is no limitation as regards the order in which the various layers are stacked at the region at which the colored layer (pixel colored layer, first spacer colored layer) and the light-shielding layer overlap, and any of the foregoing layers may be the upper layer. Thus, the first pixel colored layer and the second pixel colored layer may each have an edge disposed on the light-shielding layer, and may each have a step caused by the light-shielding layer. Alternatively, the light-shielding layer may have edges respectively disposed on the first pixel colored layer and second pixel colored layer, and may have steps respectively caused by the first pixel colored layer and the second pixel colored layer.

The present invention is also a liquid crystal display device comprising the color filter substrate of the first invention, an opposed substrate facing the color filter substrate, and a liquid crystal layer sandwiched between the color filter substrate and the opposed substrate. The color filter substrate of the first invention allows suppressing the occurrence of liquid crystal alignment disorder in the vicinity of the stack spacers. Therefore, using the color filter substrate of the first invention in a liquid crystal display device allows suppressing light leakage caused by liquid crystal alignment disorder, and allows realizing a high contrast-ratio liquid crystal display device.

The mode of the liquid crystal display device is not particularly limited, but the present invention is particularly effective in twisted nematic (TN) -mode liquid crystal display devices, where light leakage, caused by liquid crystal alignment disorder, is likely to occur in the vicinity of stack spacers. That is, the liquid crystal display device is preferably of TN-mode.

A second invention is a color filter substrate having a first pixel colored layer, a light-shielding layer and a second pixel colored layer that are disposed side by side on a substrate, wherein the light-shielding layer has a second wide portion projecting towards at least the first pixel colored layer, and is disposed so as to partially overlap edges of the first pixel colored layer and the second pixel colored layer; the color filter substrate has a second stack spacer that includes the second wide portion and a second spacer colored layer; a contour line of the second wide portion on a side of the second pixel colored layer is shorter than a contour line of the second wide portion on a side of the first pixel colored layer; and the second spacer colored layer has the same color as the second pixel colored layer and is joined to the second pixel colored layer.

In the second invention there is used, as a base of the second stack spacer, a second spacer colored layer that has the same color as the second pixel colored layer and that is joined to the second pixel colored layer, such that the first pixel colored layer is not used as the base of the second stack spacer. Accordingly, there can be reduced the longitudinal and transversal widths at the region at which the second wide portion and the first pixel colored layer overlap. This allows reducing the thickness of the upper layer at the region at which the second wide portion and the first pixel colored layer overlap, and reducing the difference in level of the step in the first pixel colored layer or of the second wide portion, on the side of the first pixel colored layer, in the vicinity of the second stack spacer. The second spacer colored layer is joined to the second pixel colored layer at the region at which the second wide portion and the second spacer colored layer overlap. Therefore, there arise concerns of insufficient thickness-reduction effect on the upper layer, large step in the second pixel colored layer or the second wide portion, and occurrence of liquid crystal alignment disorder. In this case, however, the region at which liquid crystal alignment disorder is likely to occur is smaller than in the case where the first pixel colored layer that is in contact with the longer contour line of the second wide portion is used as a base (spacer colored layer) of the second stack spacer. The second invention allows, as a result, suppressing the occurrence of liquid crystal alignment disorder in the vicinity of the second stack spacer. Herein, the region at which liquid crystal alignment disorder is likely to occur can be kept comparatively small, and hence it is possible to easily shield from light the region at which liquid crystal alignment disorder is likely to occur, by using a light-shielding member provided in the opposed substrate (for instance, TFT substrate) that opposes the color filter substrate with the liquid crystal layer sandwiched therebetween. The second spacer colored layer has the same color as the second pixel colored layer, and hence the second spacer colored layer and the second pixel colored layer can be formed in one same process. It becomes possible, as a result, to achieve easily a stable shape of the base of the second stack spacer, as is the case in the first invention. Using a color filter substrate having a configuration such as the above in a liquid crystal display device allows suppressing the occurrence of rubbing anomalies, caused by steps in the second wide portion, the first pixel colored layer or the second pixel colored layer, in the vicinity of the second stack spacer, and allows suppressing the occurrence of differences in liquid crystal alignability at portions where steps are generated, and at other portions. It becomes possible therefore to suppress the occurrence of liquid crystal alignment disorder in the vicinity of the second stack spacer. Light leakage caused by liquid crystal alignment disorder can be suppressed as a result, and there can be realized a high contrast-ratio liquid crystal display device.

The present invention is also a liquid crystal display device comprising the color filter substrate of the second invention, an opposed substrate facing the color filter substrate, and a liquid crystal layer sandwiched between the color filter substrate and the opposed substrate, and is also a liquid crystal display device wherein the opposed substrate has a light-shielding member at a region at which the second spacer colored layer and the light-shielding layer of the color filter substrate overlap each other in a plan view. In the color filter substrate of the second invention, the second spacer colored layer is connected to the pixel colored layer at the region at which the second spacer colored layer and the light-shielding layer overlap. As described above, occurrence of liquid crystal alignment disorder is a concern, and hence the region at which the second spacer colored layer and the light-shielding layer overlap is preferably shielded against light. In this case, light can be shut out easily from the region at which the second spacer colored layer and the light-shielding layer overlap, by utilizing a light-shielding member provided in the substrate that opposes the color filter substrate, without adding any new member.

The third invention is a color filter substrate in which a pixel colored layer and a island-like light-shielding layer that is surrounded by the pixel colored layer are disposed side by side on a substrate, wherein the edges of the light-shielding layer and the pixel colored layer overlap each other; the color filter substrate has a third stack spacer that includes the light-shielding layer and a third spacer colored layer; and the third spacer colored layer has the same color as the pixel colored layer and is provided spaced apart from the pixel colored layer.

The third invention allows reducing the longitudinal and transversal widths at the region at which the light-shielding layer and the pixel colored layer overlap, by causing the edges of the light-shielding layer and the pixel colored layer to overlap each other, and by using, as a base of the third spacer colored layer, the third spacer colored layer that is provided spaced apart from the pixel colored layer. This allows, as a result, reducing the thickness of the upper layer of the region at which there overlap the pixel colored layer and the light-shielding layer, at the portion included in the third stack spacer, and allows reducing steps in the pixel colored layer or the light-shielding layer in the third stack spacer, on the pixel opening side. Therefore, the occurrence of rubbing anomalies, caused by steps in the pixel colored layer or the light-shielding layer, on the pixel opening side, can be suppressed, and there can be suppressed also the occurrence of differences in liquid crystal alignability at portions where steps are generated, and at other portions. The third spacer colored layer and the pixel colored layer are of the same color, and hence the third spacer colored layer and the pixel colored layer can be formed in one same process. It becomes possible, as a result, to achieve easily a stable shape of the base of the third stack spacer, as in the case of the first and second inventions. Occurrence of liquid crystal alignment disorder in the vicinity of the third stack spacer can be suppressed by using the color filter substrate, having the above configuration, in a liquid crystal display device. Light leakage caused by liquid crystal alignment disorder can be suppressed as a result, and there can be realized a high contrast-ratio liquid crystal display device.

So long as the above-described essential constituent elements are present, the configuration of the color filter substrate of the second and third inventions is not particularly limited as regards the presence of other constituent elements.
The embodiment explained as the preferred embodiment of the first invention can be used as the preferred embodiment of the second and third color filter substrates. Occurrence of liquid crystal alignment disorder in the vicinity of the stack spacer can be suppressed in a liquid crystal display device that is provided with the second or third color filter substrate. As a result, light leakage caused by liquid crystal alignment disorder can be suppressed, and there can be realized a high contrast-ratio liquid crystal display device. The present invention is particularly effective in a case where the liquid crystal display device that is provided with the second or third color filter substrate is a TN-mode liquid crystal display device, which is prone to light leakage due to liquid crystal alignment disorder in the vicinity of the stack spacers. That is, the liquid crystal display device is preferably of TN-mode.

According to the color filter substrate and liquid crystal display device of the present invention, there can be provided a color filter substrate and a liquid crystal display device that allow suppressing the occurrence of liquid crystal alignment disorder in the vicinity of stack spacers, without increasing the number of processes, in a case where a colored layer is used as a base of the stack spacers.

### BRIEF DESCRIPTION OF THE DRAWINGS

[Fig. 1]

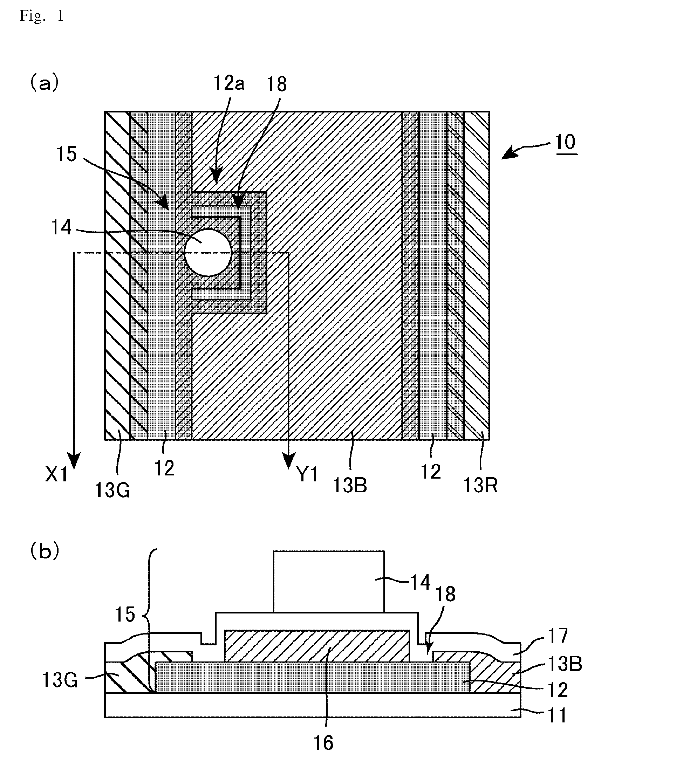

   Fig. 1 is a schematic diagram illustrating a color filter substrate of Embodiment 1, wherein (a) is a plan-view diagram, and (b) is a cross-sectional diagram of (a) along line X1-Y1.
[Fig. 2]

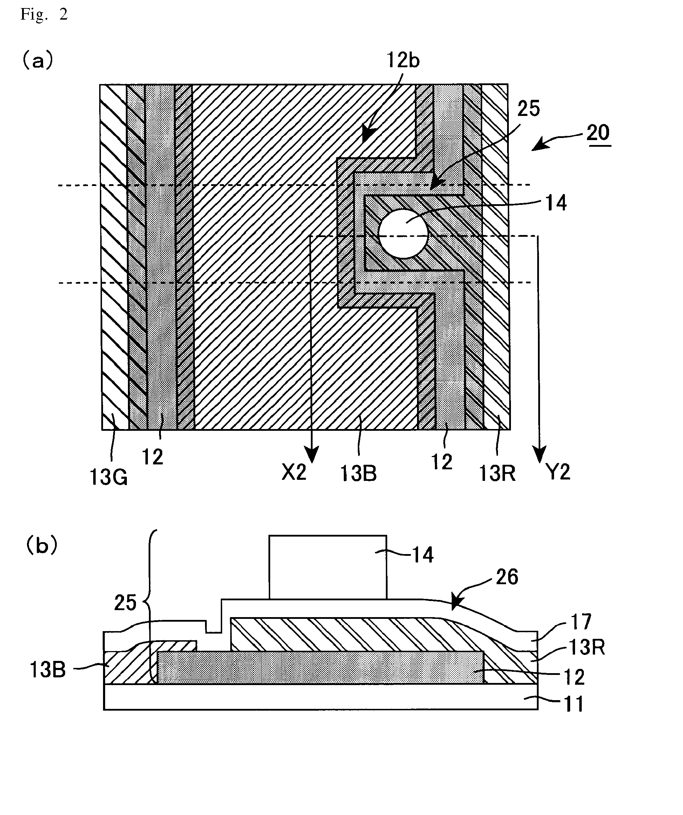

   Fig. 2 is a schematic diagram illustrating a color filter substrate of Embodiment 2, wherein (a) is a plan-view diagram, and (b) is a cross-sectional diagram of (a) along line X2-Y2.
[Fig. 3]
   Fig. 3 is a schematic diagram illustrating a conventional color filter substrate, wherein (a) illustrates a plan-view diagram and (b) is a cross-sectional diagram of (a) along line X3-Y3.
[Fig. 4]
   Figs. 4 (a) to (c) are schematic diagrams illustrating edges of a black matrix on which part of a colored layer is disposed, in a color filter substrate;
[Fig. 5]

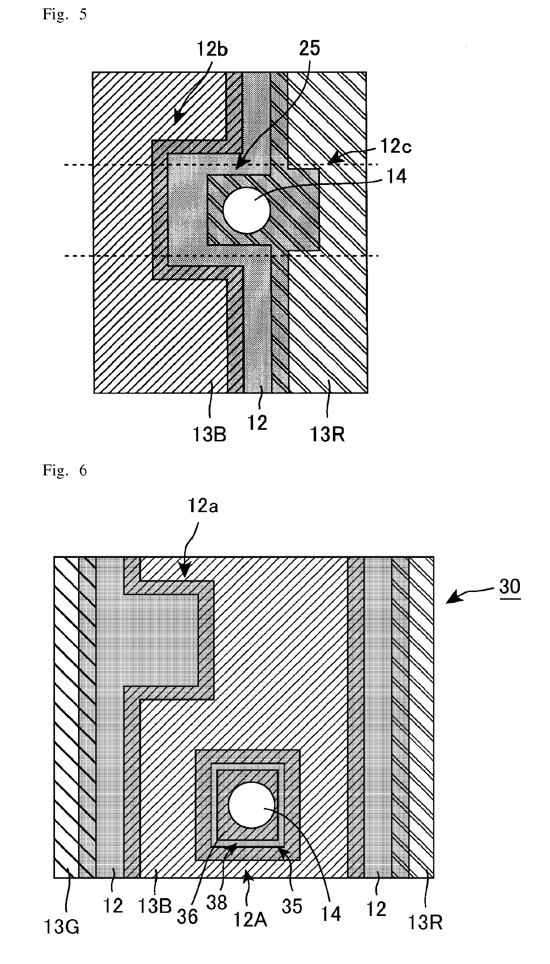

   Fig. 5 is a plan-view schematic diagram illustrating another color filter substrate of Embodiment 2.
[Fig. 6]
   Fig. 6 is a plan-view schematic diagram illustrating a color filter substrate of Embodiment 3.
[Fig. 7]

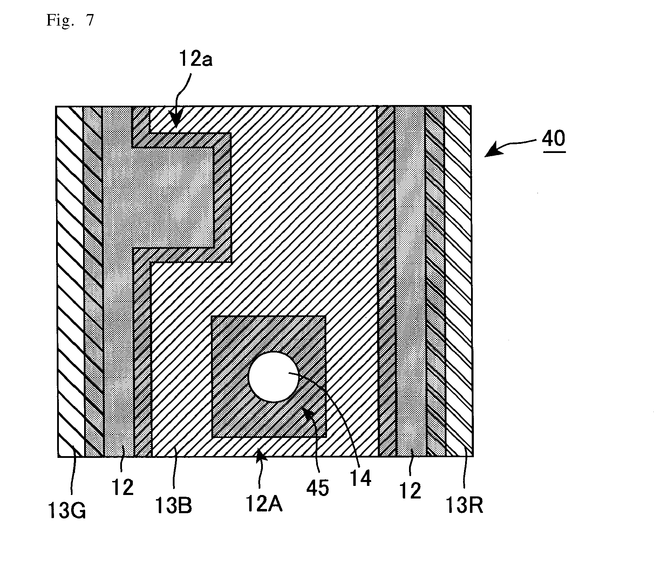

   Fig. 7 is a plan-view schematic diagram illustrating a comparative example of the color filter substrate of Embodiment 3.
[Fig. 8]

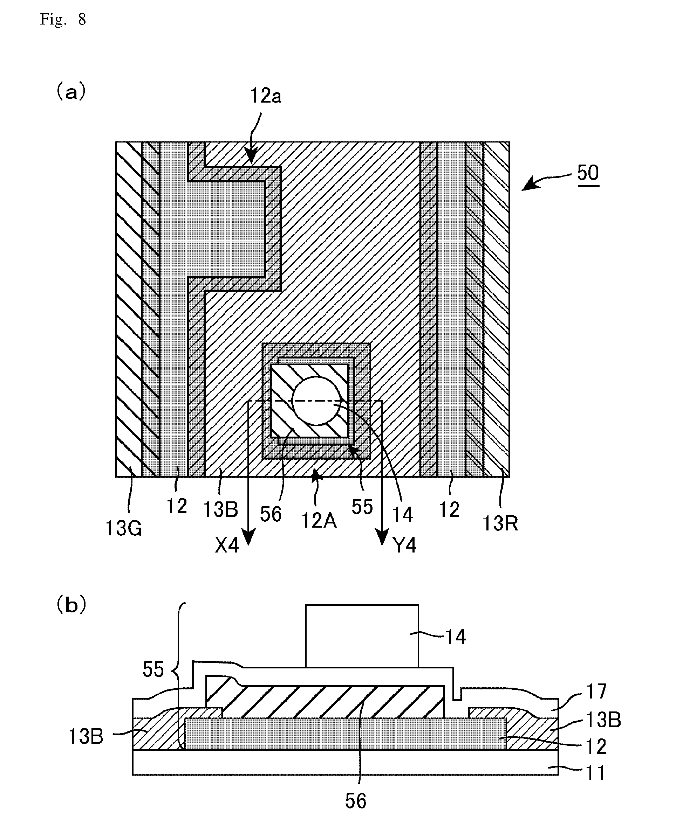

   Fig. 8 is a schematic diagram illustrating a comparative example of the color filter substrate of Embodiment 3, wherein (a) illustrates a plan-view diagram and (b) is a cross-sectional diagram of (a) along line X4-Y4.

### EXPLANATION OF REFERENCE NUMERALS

10, 20, 30, 40, 50, 110: color filter substrate
11, 111: substrate
12, 112: black matrix
12a, 12b, 12c, 112a: projection
12A: island portion
13R, 113R: pixel colored layer (red)
13G, 113G: pixel colored layer (green)
13B, 113B: pixel colored layer (blue)
14, 114: columnar portion
15, 25, 35, 45, 55, 115: stack spacer
16, 26, 36, 56: spacer colored layer
17, 117: common electrode
18, 38: separating portion
213a, 213b, 213c: colored layer edge

### BEST MODE FOR CARRYING OUT THE INVENTION

The present invention will be explained in detail below based on examples with reference to accompanying drawings. However, the present invention is not limited to these embodiments alone.

### Embodiment 1

The liquid crystal display device of Embodiment 1 is a TN-mode liquid crystal display device that comprises a TFT substrate and a color filter substrate opposing each other. Stack spacers keep a constant spacing between the two substrates. The TFT substrate and the color filter substrate are bonded to each other by way of a sealing agent. A liquid crystal material comprising liquid crystal molecules having positive dielectric constant anisotropy is filled between the two substrates to form a liquid crystal layer. In a state where no voltage is applied between the two substrates, the liquid crystal layer exhibits a horizontal alignment mode in which the liquid crystal molecules are aligned parallel to the substrates. The TFT substrate has an ordinary configuration, and comprises, for instance, a substrate, and provided thereon, lines such as source lines, gate lines, Cs lines (holding capacitor line), TFTs as switching elements, an insulating layer, pixel electrodes and an alignment layer.

Fig. 1 is a schematic diagram illustrating a color filter substrate of Embodiment 1 according to the present invention, wherein (a) illustrates a plan-view diagram and (b) is a cross-sectional diagram of (a) along line X1-Y1. As illustrated in Fig. 1, the color filter substrate of Embodiment 1 comprises a transparent substrate 11 and, on the side (liquid crystal layer side) of one main face thereof, a black matrix 12, a pixel colored layer (red) 13R, a pixel colored layer (green) 13G, a pixel colored layer (blue) 13B, a stack spacer 15, a common electrode 17 and an alignment layer. The black matrix 12 is a light-shielding layer having pixel openings. The pixel colored layer (red) 13R, the pixel colored layer (green) 13G and the pixel colored layer (blue) 13B are disposed side by side, on a plane, in accordance with each color of each pixel.

The black matrix 12 is formed of a material comprising a resin, and has a portion (source light-shielding portion) extending in the up-and-down direction of Fig. 1(a) and formed along source lines of the TFT substrate, which is the opposed substrate, and a portion (gate light-shielding portion and Cs light-shielding portion) extending in the left-right direction of Fig. 1(a) and formed along the gate lines and Cs lines of the TFT substrate. Fig. 1(a) illustrates only the periphery of the stack spacer 15. The gate light-shielding portion and the Cs light-shielding portion are disposed parallel to each other. The source light-shielding portion is disposed to be perpendicular to the gate light-shielding portion and to the Cs light-shielding portion. The opening region surrounded by the source light-shielding portion and the gate light-shielding portion becomes substantially one pixel (sub-picture element, i.e. single-color region that constitutes a picture element). Thus, each pixel is surrounded by a source light-shielding portion and a gate light-shielding portion of the black matrix 12. In a plan view of the substrate 11, the black matrix 12 has a wide portion, the width whereof is greater than that of other portions, at a portion disposed between the pixel colored layer (green) 13G and the pixel colored layer (blue) 13B. More specifically, the black matrix 12 has a projection 12a that bulges towards the pixel colored layer (blue) 13B.
The stack spacer 15 is provided mainly on the projection 12a. The pixel colored layer that is in contact with the projection 12a (the pixel colored layer (blue) 13B in Embodiment 1) overlaps the projection 12a along the contour of the projection 12a. Thus, the black matrix 12 has a wide portion, and the stack spacer 15 is provided on the projection 12a, as a result of which there can be suppressed light leakage due to liquid crystal alignment disorder in the vicinity of the stack spacer 15. However, the aperture ratio may decrease when the black matrix 12 is formed in a pattern having such wide portions. From the viewpoint of suppressing drops in the aperture ratio, therefore, the pattern of the black matrix 12 is preferably disposed in such a manner so as to overlap, as much as possible, the pattern of the light-shielding members provided on the TFT substrate, such as gate lines and Cs lines. This allows suppressing light leakage due to liquid crystal alignment disorder in the vicinity of the stack spacer 15.

The width of the wide portion is not particularly limited, but is preferably greater than the diameter of a below-described columnar portion 14 of the stack spacer 15. The plan-view diameter of the columnar portion 14 ranges ordinarily from about 10 to 30 µm. Therefore, the longitudinal width (up-and-down direction in Fig. 1(a)) of the wide portion ranges preferably from about 30 to 70 µm, and the transversal width (left-right direction in Fig. 1(a)) from about 36 to 100 µm. The transversal width of portions of the black matrix 12 other than the wide portion may range ordinarily from about 6 to 30 µm.

The pixel colored layer (red) 13R, the pixel colored layer (green) 13G and the pixel colored layer (blue) 13B are disposed at pixel openings (regions where the black matrix 12 is not formed) that are adjacent in the left-right direction of Fig. 1(a). The pixel openings at which the pixel colored layer (red) 13R, the pixel colored layer (green) 13G and the pixel colored layer (blue) 13B are disposed constitute respectively a red pixel, a blue pixel and a green pixel. From the viewpoint of improving the display quality of the liquid crystal display device, the red black matrix 12 is disposed between the red pixels, the blue pixels and the green pixels, and the edges of the pixel colored layer (red) 13R, the pixel colored layer (green) 13G and the pixel colored layer (blue) 13B are disposed so as to overlap respective edges of the black matrix 12. The color filter substrate 10 of Embodiment 1 is a stripe-array color filter substrate in which red pixels, blue pixels and green pixels are arrayed in the stripes. In the liquid crystal display device of Embodiment 1, one picture element (minimum unit that constitutes a display image) comprises a red pixel, a blue pixel and a green pixel adjacent to each other in the left-right direction of Fig. 1(a). In the TFT substrate there is provided a TFT, which is a switching element, and a pixel electrode connected to the TFT, for each pixel.

The stack spacer 15 comprises the wide portion (mainly the projection 12a) of the black matrix 12, a base in which there are stacked a spacer colored layer 16 and a common electrode 17, and a columnar portion 14 that adjusts the height of the stack spacer 15. The spacer colored layer 16 has the same color as the pixel colored layer (pixel colored layer (blue) 13B in Embodiment 1) that is in contact with the projection 12a. A separating portion 18, which is a portion at which the colored layer is not disposed, is formed in the projection 12a. The spacer colored layer 16 and the pixel colored layer (blue) 13B are separated by the separating portion 18. Therefore, the spacer colored layer 16 and the pixel colored layer (blue) 13B are joined only at the root of the projection 12a (around the center of the wide portion). In Embodiment 1, the spacer colored layer 16 and the pixel colored layer (blue) 13B have a continuous joined shape in which the foregoing are connected to each other. The pixel colored layer (blue) 13B at the portion separated by the separating portion 18 can be considered to function as the spacer colored layer 16. The longitudinal and transversal width of the region at which the pixel colored layer (blue) 13B and the projection 12a overlap can be reduced thanks to the separating portion 18 provided thus in the pixel colored layer (blue) 13B at a portion of the latter positioned on the projection 12a. The region at which the pixel colored layer (blue) 13B and the projection 12a overlap can be set to be a thin strip-like shape. This allows reducing as a result the step, caused by the projection 12a, in the pixel colored layer (blue) 13B, on the pixel opening side. The pixel colored layer (green) 13G need not be used as a base of the stack spacer 15, and hence can overlap the black matrix 12 along the contour of the black matrix 12. It becomes possible therefore to suppress the occurrence of liquid crystal alignment disorder in the vicinity of the stack spacer 15. Since the spacer colored layer 16 and the pixel colored layer (blue) 13B have a continuous joined shape in which the foregoing are connected to each other, the spacer colored layer 16 and the pixel colored layer (blue) 13B can be formed in the same process. This allays the concern of increases in the step of the stack spacer 15, on the pixel opening side, and the concern of height instability of the base of the stack spacer 15, caused by overlapping of the spacer colored layer 16 and the pixel colored layer (blue) 13B. It becomes thus possible to achieve easily a stable shape of the base of the stack spacer 15.

The thickness of the columnar portion 14 can be reduced by way of the height of the base, through stacking of the projection 12a, the spacer colored layer 16 and the common electrode 17 as the base of the stack spacer 15.
The thickness of the columnar portion 14 can be easily controlled thereby, and therefore the stack spacer 15 can be formed to a stable height. The projection 12a and the spacer colored layer 16 are stacked on each other, and hence missing portions such as pinholes or the like that may occur in the projection 12a can be rendered unnoticeable through covering of the missing portions by the spacer colored layer 16.

In terms of further suppressing light leakage caused by liquid crystal alignment disorder in the vicinity of the stack spacer 15, the pixel colored layer that overlaps the projection 12a is preferably the pixel colored layer (red) 13R or the pixel colored layer (blue) 13B, both of which have a lower transmittance than the pixel colored layer (green) 13G.

In the color filter substrate 10, the black matrix 12 comprises a resin, and hence steps in the pixel colored layer (red) 13R, the pixel colored layer (green) 13G and the pixel colored layer (blue) 13B caused by the black matrix 12 tend to be large in comparison to a case where the black matrix 12 is formed using a metal film. Among the foregoing, the step in the pixel colored layer that is caused by the projection 12a (pixel colored layer (blue) 13B in Embodiment 1), in particular, tends to be large.

In the color filter substrate 10, the black matrix 12 comprises a resin, and hence steps in the pixel colored layer (red) 13R, the pixel colored layer (green) 13G and the pixel colored layer (blue) 13B caused by the black matrix 12 tend to be large, in particular, among the foregoing, the step in the pixel colored layer that is caused by the projection 12a (pixel colored layer (blue) 13B in Embodiment 1), than in a case where the black matrix 12 is formed using a metal film. In the color filter substrate 10 of Embodiment 1, however, the step in the pixel colored layer caused by the projection 12a can be effectively reduced as described above. It becomes possible therefore to suppress the occurrence of liquid crystal alignment disorder in the vicinity of the stack spacer 15.

Moreover, the color filter substrate 10 is not provided with an overcoat layer (film having a flattening effect) formed so as to cover the pixel colored layer (red) 13R, the pixel colored layer (green) 13G, the pixel colored layer (blue) 13B and the black matrix 12. Therefore, steps in the pixel colored layer (red) 13R, the pixel colored layer (green) 13G and the pixel colored layer (blue) 12B caused by the black matrix 12 tend to be large, in particular, among the foregoing, the step in the pixel colored layer that is caused by the projection 12a (pixel colored layer (blue) 13B in Embodiment 1). In the color filter substrate 10 of Embodiment 1, however, the step in the pixel colored layer caused by the projection 12a can be effectively reduced, as described above. It becomes possible therefore to suppress the occurrence of liquid crystal alignment disorder in the vicinity of the stack spacer 15 without increasing the number of processes.

In the color filter substrate 10, the black matrix 12 has a wide portion that comprises the projection 12a. As a result, the step in the pixel colored layer (pixel colored layer (blue) 13B in Embodiment 1) caused by the projection 12a tends to be large in a configuration such as that of the conventional color filter substrate 110 illustrated in Fig. 3. In the color filter substrate 10 of Embodiment 1, however, the difference in level of the step in the pixel colored layer caused by the projection 12a can be effectively reduced, as described above. It becomes possible therefore to suppress the occurrence of liquid crystal alignment disorder in the vicinity of the stack spacer 15.

A method for manufacturing the liquid crystal display device of Embodiment 1 is explained next. Processes other than the manufacturing process of the color filter substrate 10, for instance the manufacturing process of the TFT substrate, the panel assembly process and so forth are identical to conventional cases, and hence the explanation will focus mainly on the method for manufacturing the color filter substrate.

The color filter substrate 10 is formed, for instance, by photolithography and printing. An example will be explained herein in which the color filter substrate 10 is formed by photolithography. More specifically, firstly there is formed, on the substrate 11, a black photosensitive resin film using an ordinary negative-type or positive-type black photosensitive resin composition (for instance, a negative-type or positive-type photosensitive acrylic resin composition comprising carbon black or a pigment). Thereafter, the black photosensitive resin film is patterned by photolithography to form the black matrix 12 having the projection 12a (wide portion). Preferably, the thickness of the black matrix 12 ranges from 0.5 to 4 µm. The shape of the projection 12a is not particularly limited, and may be, for instance, a trapezoidal, circular or oval shape, other than the rectangular shape illustrated in Fig. 1. Printing or the like may also be used as the method for forming the black matrix 12.

The layout of the black matrix 12 is not particularly limited, so long as the black matrix 12 is formed in such a manner that light is blocked in at least part of the space between adjacent pixels. The black matrix 12 may have only the source light-shielding portion and the gate light-shielding portion, or may have only the source light-shielding portion, as illustrated in Fig. 1. The black matrix 12 may further have a portion for light-shielding the switching element of the TFT substrate.

A glass substrates is commonly used as the substrate 11, for instance a plastic film, a plastic sheet or the like. As the case may require, a thin film for enhancing adhesion may be formed beforehand on the substrate 11 with a view to enhancing adhesion of the black matrix 12, the pixel colored layer (red) 13R, the pixel colored layer (green) 13G and the pixel colored layer (blue) 13B towards the substrate 11.

Next, a red-color photosensitive resin film (color film) is formed on the substrate 11 by applying or transferring a negative-type or positive-type liquid color resist (for instance, a negative-type or positive-type photosensitive acrylic resin composition comprising a pigment), or a negative-type or positive-type film-like color resist (for instance, a negative-type or positive-type photosensitive acrylic film or the like comprising a pigment). Thereafter, the red-color photosensitive resin film is patterned by photolithography to form a pixel colored layer (red) 13R at a region that encompasses a pixel opening (region where the black matrix 12 is not formed). The thickness of the pixel colored layer (red) 13R at the pixel opening ranges preferably from 0.5 to 3 µm. The edge of the pixel colored layer (red) 13R on the side of the black matrix 12 overlaps the black matrix 12, and hence the pixel colored layer (red) 13R has a step caused by the black matrix 12. However, the thickness of the pixel colored layer (red) 13R at the region where the latter overlaps the black matrix 12 is smaller than the thickness at the pixel opening. The width of the region at which the pixel colored layer (red) 13R and the black matrix 12 overlap is preferably no greater than 15 µm, more preferably no greater than 6 µm. The effect of reducing the thickness of the pixel colored layer (red) 13R at the region where the latter overlaps the black matrix 12 can be fully brought out thereby. More specifically, the step in the pixel colored layer (red) 13R at the region where the latter overlaps the black matrix 12 ranges from about 0.2 to 4 µm. The pixel colored layer (red) 13R may be formed using a non-photosensitive resin by printing or the like.

Next, a blue-color photosensitive resin film (color film) is formed on the substrate 11 by applying or transferring a negative-type or positive-type liquid color resist (for instance, a negative-type or positive-type photosensitive acrylic resin composition comprising a pigment), or a negative-type or positive-type film-like color resist (for instance, a negative-type or positive-type photosensitive acrylic film or the like comprising a pigment). Thereafter, the blue-color photosensitive resin film is patterned by photolithography to form a pixel colored layer (blue) 13B at a region that encompasses a pixel opening (region where the black matrix 12 is not formed). The thickness of the pixel colored layer (blue) 13B at the pixel opening ranges preferably from 0.5 to 3 µm. The spacer colored layer 16 is formed at the same time through formation of the pixel colored layer (blue) 13B. Therefore, the thickness of the spacer colored layer 16 is ordinarily about the same as the thickness of the pixel colored layer (blue) 13B at the pixel opening. The edge of the pixel colored layer (blue) 13B on the side of the black matrix 12 overlaps the black matrix 12, and hence the pixel colored layer (blue) 13B has a step caused by the black matrix 12. However, the thickness of the pixel colored layer (blue) 13B at the region where the latter overlaps the black matrix 12 is smaller than the thickness at the pixel opening. During patterning of the blue-color photosensitive resin film, the separating portion 18 is formed, in the overlapping region with the projection 12a, in such a manner that the pixel colored layer (blue) 13B and the spacer colored layer 16 are joined only at the root of the projection 12a. The width of the separating portion 18 may range from about 2 to 10 µm. The width of the region at which the pixel colored layer (blue) 13B and the black matrix 12 overlap is preferably no greater than 15 µm, more preferably no greater than 6 µm. The effect of reducing the thickness of the pixel colored layer (blue) 13B at the region where the latter overlaps the black matrix 12 can be fully brought out thereby. More specifically, the step in the pixel colored layer (blue) 13B at the region where the latter overlaps the black matrix 12 ranges from about 0.2 to 4 µm. The pixel colored layer (blue) 13B may be formed using a non-photosensitive resin by printing or the like.

Next, a green-color photosensitive resin film (color film) is formed on the substrate 11 by applying or transferring a negative-type or positive-type liquid color resist (for instance, a negative-type or positive-type photosensitive acrylic resin composition comprising a pigment), or a negative-type or positive-type film-like color resist (for instance, a negative-type or positive-type photosensitive acrylic film or the like comprising a pigment). Thereafter, the green-color photosensitive resin film is patterned by photolithography to form a pixel colored layer (green) 13G at a region that encompasses a pixel opening. The thickness of the pixel colored layer (green) 13G at the pixel opening ranges preferably from 0.5 to 3 µm. The edge of the pixel colored layer (green) 13G on the side of the black matrix 12 overlaps the black matrix 12, and thus the pixel colored layer (green) 13G has a step caused by the black matrix 12. However, the thickness of the pixel colored layer (green) 13G at the region where the latter overlaps the black matrix 12 is smaller than the thickness at the pixel opening. The width of the region at which the pixel colored layer (green) 13G and the black matrix 12 overlap is preferably no greater than 15 µm, more preferably no greater than 6 µm. The effect of reducing the thickness of the pixel colored layer (green) 13G at the region where the latter overlaps the black matrix 12 can be fully brought out thereby. More specifically, the step in the pixel colored layer (green) 13G at the region where the latter overlaps the black matrix 12 ranges from about 0.2 to 4 µm. The pixel colored layer (green) 13G may be formed using a non-photosensitive resin by printing or the like.

The order in which the pixel colored layer (red) 13R, the pixel colored layer (green) 13G and the pixel colored layer (blue) 13B are formed is not particularly limited, and may be set arbitrarily.

The color of the spacer colored layer 16 is not particularly limited, but in terms of suppressing light leakage from the stack spacer 15, the pixel colored layer (red) 13R or the pixel colored layer (blue) 13B, both of which have a lower transmittance than the pixel colored layer (green) 13G, is preferably used as the spacer colored layer 16 in a case where pixel colored layers of three colors red, green and blue, are employed. For the same reason, the stack spacer 15 is preferably provided selectively at red pixels or blue pixels.

Next, the common electrode 17 is formed so as to cover the black matrix 12, the pixel colored layer (red) 13R, the pixel colored layer (green) 13G, the pixel colored layer (blue) 13B and the spacer colored layer 16. A transparent electrode film may be used as the common electrode 17. Examples of the material thereof include, for instance, indium-tin oxide (ITO) or InTiO₃. The method for forming the common electrode 17 may be, for instance, sputtering.

Next, a photosensitive resin film is formed using a negative-type or positive-type resin composition (for instance, a negative-type or positive-type photosensitive acrylic resin composition), and the photosensitive resin film is patterned thereafter by photolithography. The columnar portion 14 can be formed thereby on the spacer colored layer 16. Although the material of the columnar portion 14 is not particularly limited, the latter can be easily formed by photolithography using a photosensitive resin. The photosensitive resin may be a photosensitive resin comprising a black pigment, a photosensitive resin (color resist) containing a pigment, or a transparent photosensitive resin comprising no pigment. The height of the columnar portion 14 may be appropriately set in accordance with the desired cell gap. The columnar portion 14 may be formed on the side of the TFT substrate. The columnar portion 14 may be formed using a non-photosensitive resin by printing or the like.

Thereafter, the alignment layer is formed, and is subjected to a rubbing treatment, to complete thereby the color filter substrate 10. Examples of the material of the alignment layer include, for instance, a thermosetting polyimide resin.

The liquid crystal display device of Embodiment 1 can be completed by carrying out a cell assembly process and a module assembly process using the color filter substrate 10 manufactured as described above and an ordinary TFT substrate.

In the liquid crystal display device of Embodiment 1, as described above, there can be suppressed the occurrence of liquid crystal alignment disorder in the vicinity of the stack spacer without increasing the number of processes. A high-contrast ratio TN-mode liquid crystal display device can be realized as a result where light leakage arising from liquid crystal alignment disorder is suppressed.

### Embodiment 2

As is the case in the liquid crystal display device of Embodiment 1, the liquid crystal display device of Embodiment 2 is a TN-mode liquid crystal display device that comprises a TFT substrate and color filter substrate opposed to each other. Fig. 2 is a schematic diagram illustrating a color filter substrate of Embodiment 2 according to the present invention, wherein (a) is a plan-view diagram, and (b) is a cross-sectional diagram of (a) along line X2-Y2. In Fig. 2, members identical to those of Embodiment 1 are denoted with the same reference numerals, and an explanation thereof will be omitted.

As illustrated in Fig. 2, a color filter substrate 20 of Embodiment 2 comprises a transparent substrate 11 and, on the side of one main face thereof (liquid crystal layer side), a black matrix 12 which is a light-shielding layer, having a pixel opening, a pixel colored layer (red) 13R, a pixel colored layer (green) 13G and a pixel colored layer (blue) 13B provided each in a respective pixel, a stack spacer 25, a common electrode 17 and an alignment layer. The region demarcated by a broken line in Fig. 2 denotes a region that is shielded from light by a light-shielding member provided in the TFT substrate.

In a plan view of the substrate 11, the black matrix 12 has a wide portion at a portion disposed between the pixel colored layer (blue) 13B and the pixel colored layer (red) 13R. The width thereof is greater than that of other portions. More specifically, the black matrix 12 has a projection 12b that bulges towards the pixel colored layer (blue) 13B. The contour line of the wide portion on the side of the pixel colored layer (red) 13R is shorter than the contour line of the wide portion on the side of the pixel colored layer (blue) 13B. The pixel colored layer (in Embodiment 2, the pixel colored layer (blue) 13B)that is in contact with the projection 12b has a recessed cross-sectional shape corresponding to the projection 12b. The stack spacer 25 is provided mainly on the projection 12b. More specifically, the stack spacer 25 comprises the wide portion (mainly the projection 12b) of the black matrix 12, a base in which there are stacked a spacer colored layer 26 and a common electrode 17, and a columnar portion 14 that adjusts the height of the stack spacer 25. The spacer colored layer 26 is joined to the pixel colored layer (red) 13R, which is adjacent to the pixel colored layer (in Embodiment 2, the pixel colored layer (blue) 13B) that is in contact with the projection 12b with the stack spacer 25 disposed therebetween. In Embodiment 2, specifically, the spacer colored layer 26 and the pixel colored layer (red) 13R have a continuous integrated shape, such that the projection of the pixel colored layer (red) 13R can be considered to function as the spacer colored layer 26. The region at which the spacer colored layer 26 and the black matrix 12 overlap has, for instance, a longitudinal width (up-and-down direction in Fig. 2(a)) of 20 to 60 µm, and a transversal width (left-right direction in Fig. 2(a)) of 26 to 90 µm. The projection 12b has, for instance, a longitudinal width (up-and-down direction in Fig. 2(a)) of 30 to 70 µm, and a transversal width (left-right direction in Fig. 2(a)) of 36 to 76 µm. As illustrated in Fig. 2(a), the longitudinal width of the region at which the spacer colored layer 26 and the black matrix 12 overlap can be reduced in Embodiment 2. As a result, the region at which alignment disorder occurs in the vicinity of the stack spacer 25 can be made smaller, and light shielding can be easily achieved using a light-shielding member provided in the TFT substrate, such as gate lines, Cs lines or the like, with no supplementary new members.

The longitudinal and transversal widths of the pixel colored layer (blue) 13B at the region overlapping the projection 12b can be reduced by not using, as the base of the stack spacer 25, the pixel colored layer (blue) 13B that is in contact with the projection 12b. That is, the region at which the pixel colored layer (blue) 13B and the projection 12b overlap can be set to be a thin strip-like shape. This allows reducing, as a result, the difference in level of the step in the pixel colored layer (blue) 13B, on the pixel opening side, caused by the projection 12b.
It becomes possible therefore to suppress the occurrence of liquid crystal alignment disorder in the vicinity of the stack spacer 25. The spacer colored layer 26 is joined to the pixel colored layer (red) 13R at the region at which the wide portion of the black matrix 12 and the spacer colored layer 26 overlap. Therefore, the thickness reducing effect of the spacer colored layer 26 is hardly brought out. The step in the pixel colored layer (red) 13R, on the pixel opening side, is thus large, and liquid crystal alignment disorder is likely to occur. However, the region at which liquid crystal alignment disorder is likely to occur is in this case the region at which the spacer colored layer 26 and the black matrix 12 overlap. The region at which liquid crystal alignment disorder is likely to occur can be made smaller as compared with a case in which there is used, as a base of the stack spacer 25, the portion of the pixel colored layer (blue) 13B that overlaps the projection 12b, being a portion of the pixel colored layer (blue) 13B that is disposed on the side into which the projection 12b projects. Therefore, the occurrence of liquid crystal alignment disorder in the vicinity of the stack spacer 25 can be suppressed, as compared with a conventional case, also in the color filter substrate 20. Further, the region at which liquid crystal alignment disorder is likely to occur can be kept comparatively small, and hence the region at which liquid crystal alignment disorder is likely to occur can be easily shielded from light using a light-shielding member provided in the TFT substrate, such as gate lines, Cs lines or the like, with no supplementary new members. Moreover, since the spacer colored layer 26 and the pixel colored layer (red) 13R are joined, the spacer colored layer 26 and the pixel colored layer (red) 13R can be formed in the same process. This allays the concern of increases in the step in the stack spacer 25, on the pixel opening side, and the concern of height instability of the base of the stack spacer 25, caused by overlapping of the spacer colored layer 26 and the pixel colored layer (red) 13R. It becomes thus possible to achieve easily a stable shape of the base of the stack spacer 25.

The color of the spacer colored layer 26 is not particularly limited, but in terms of suppressing light leakage from the stack spacer 25, the pixel colored layer (red) 13R or the pixel colored layer (blue) 13B, both of which have a lower transmittance than the pixel colored layer (green) 13G, is preferably used as the spacer colored layer 26 in a case where pixel colored layers of three colors red, green and blue, are employed. For the same reason, the pixel colored layer (red) 13R or the pixel colored layer (blue) 13B, both of which have a lower transmittance than the pixel colored layer (green) 13G, is preferably used as a pixel colored layer that is adjacent to the spacer colored layer 26 and the stack spacer 25 side.

### Embodiment 3

As is the case in the liquid crystal display device of Embodiments 1 and 2, the liquid crystal display device of Embodiment 3 is a TN-mode liquid crystal display device that comprises a TFT substrate and color filter substrate mutually opposing each other. Fig. 6 is a plan-view schematic diagram illustrating a color filter substrate of Embodiment 3. Fig. 7 is a plan-view schematic diagram illustrating a comparative example of the color filter substrate of Embodiment 3. Fig. 8 is a schematic diagram illustrating a comparative example of the color filter substrate of Embodiment 3, wherein (a) is a plan-view diagram, and (b) is a cross-sectional diagram of (a) along line X4-Y4. In Figs. 6 to 8, members identical to those of Embodiment 1 are denoted with the same reference numerals, and an explanation thereof will be omitted.

As illustrated in Fig. 6, a color filter substrate 30 of Embodiment 3 comprises a transparent substrate 11 and, on the side (liquid crystal layer side) of one main face thereof, a black matrix 12, a pixel colored layer (red) 13R, a pixel colored layer (green) 13G, a pixel colored layer (blue) 13B, a stack spacer 35, a common electrode and an alignment layer. The black matrix 12 is a light-shielding layer having pixel openings. The pixel colored layer (red) 13R, the pixel colored layer (green) 13G and the pixel colored layer (blue) 13B are disposed side by side, on a plane, in accordance with each color of each pixel. The stack spacer 35 is disposed on an island portion 12A that is an isolated island-like light-shielding layer not joined to the black matrix 12. The pixel colored layer (blue) 13B is disposed around the island portion 12A in such a manner that the island portion 12A and the pixel colored layer (blue) 13B overlap at the edges. As the base of the stack spacer 35 there is used the island portion 12A and a spacer colored layer 36 that is provided so as to overlap the island portion 12A. The width of the island portion 12A is not particularly limited, but is preferably larger than the diameter of the columnar portion 14. More specifically, the plan-view diameter of the columnar portion 14 ranges ordinarily from about 10 to 30 µm. Therefore, the longitudinal width of the island portion 12A (up-and-down direction in Fig. 6) ranges preferably from 20 to 80 µm and the transversal width (left-right direction in Fig. 6) ranges preferably from 20 to 80 µm. The spacer colored layer 36 is an island-like colored layer that is provided spaced apart from the pixel colored layer (pixel colored layer (blue) 13B in Embodiment 3) that is disposed around the island portion 12A. The spacer colored layer 36 has the same color as the pixel colored layer (blue) 13B. Thus, a separating portion 38 can be considered to be provided on the island portion 12A, along the contour of the island portion 12A. The width of the separating portion 38 may range from about 2 to 10 µm. The edge of the pixel colored layer (blue) 13B on the side of the island portion 12A overlaps the island portion 12A. The pixel colored layer (blue) 13B has a step caused by the island portion 12A. However, the thickness of the pixel colored layer (blue) 13B at the region where the latter overlaps the island portion 12A is smaller than the thickness at the pixel opening. The width of the region at which the pixel colored layer (blue) 13B and the island portion 12A overlap is preferably no greater than 15 µm, more preferably no greater than 6 µm. The effect of reducing the thickness of the pixel colored layer (blue) 13B at the region where the latter and the island portion 12A overlap can be fully brought out thereby. More specifically, the step in the pixel colored layer (blue) 13B at the region where the latter and the island portion 12A overlap ranges from about 0.2 to 4 µm.

The longitudinal and transversal widths of the pixel colored layer (blue) 13B at the region where the latter overlaps the island portion 12A can be reduced, in the color filter substrate 30, by arranging, on the island portion 12A, the spacer colored layer 36 in the form of an isolated island. This allows, as a result, reducing the difference in level of the step in the pixel colored layer (blue) 13B caused by the island portion 12A. It becomes possible therefore to suppress the occurrence of liquid crystal alignment disorder in the vicinity of the stack spacer 35. Further, the spacer colored layer 36 and the pixel colored layer (blue) 13B provided in the pixel at which the stack spacer 35 is disposed are of the same color. Therefore, the spacer colored layer 36 and the pixel colored layer (blue) 13B can be formed in the same process. This allays the concern of increases in the step around the stack spacer 35, and the concern of height instability of the base of the stack spacer 35, caused by overlapping of the spacer colored layer 36 and the pixel colored layer (blue) 13B, thereby making it possible to easily and stably form the base of the stack spacer 35.

In Fig. 6 a configuration has been explained wherein the black matrix 12 having the wide portion 12a is provided between the pixel colored layer (red) 13R, the pixel colored layer (green) 13G and the pixel colored layer (blue) 13B, and the island portion 12A is disposed in a pixel. However, the black matrix 12 may be omitted in that configuration, so that only the island portion 12A is provided.

In a color filter substrate 40 illustrated in Fig. 7, the entirety of the island portion 12A is covered by the pixel colored layer (blue) 13B. Herein, the island portion 12A and the region of the pixel colored layer (blue) 13B that overlaps the island portion 12A are used as the base of a stack spacer 45. That is, the portion of the pixel colored layer (blue) 13B that overlaps the island portion 12A functions as the spacer colored layer in the color filter substrate 40.

In the color filter substrate 40, thus, no separating portion is provided on the island portion 12A. Instead, the entirety of the island portion 12A is covered by the pixel colored layer (blue) 13B, and hence the longitudinal and transversal widths of the region of the pixel colored layer (blue) 13B that overlaps the island portion 12A are large. As a result, the difference in level of the step in the pixel colored layer (blue) 13B caused by the island portion 12A cannot be sufficiently reduced, and hence liquid crystal alignment disorder occurs in the vicinity of the stack spacer 35.

In a color filter substrate 50 illustrated in Fig. 8(a) and Fig. 8(b), an island portion 12A as well as a spacer colored layer 56 disposed so as to overlap the island portion 12A are used as the base of a stack spacer 55. The spacer colored layer 56 is of a different color from that of the pixel colored layer (blue) 13B that is disposed around the island portion 12A.

The spacer colored layer 56 and the pixel colored layer (blue) 13B in the color filter substrate 50 have thus different colors, and hence the spacer colored layer 56 and the pixel colored layer (blue) 13B must be formed in different processes. In case of misalignment, finished width offset or the like during the processes of forming the spacer colored layer 56 and the pixel colored layer (blue) 13B, therefore, there arise concerns of overlap between the spacer colored layer 56 and the pixel colored layer (blue) 13B, increased step in the vicinity of the stack spacer 55, and instability of the height of the base of the stack spacer 55. In order to allay the above concerns, a high degree of precision is required in the processes of forming the spacer colored layer 56 and the pixel colored layer (blue) 13B. Therefore, the configuration of Embodiment 3 is found to be superior in that it is easier to implement.

In Embodiments 1 to 3 configurations have been explained in which the light-shielding layer is formed before formation of the pixel colored layers and of the spacer colored layer, i.e. configurations wherein the edges of the pixel colored layers are disposed higher than the black matrix, such that the pixel colored layers have steps caused by the black matrix. However, there is no limitation as regards the order in which the various layers are stacked at the region at which the colored layer (pixel colored layer, first, second and third spacer colored layers) and the light-shielding layer overlap, and any layer may be the upper layer. For instance, in an configuration where the pixel colored layer and the spacer colored layer are formed before the black matrix, and the latter is disposed on the pixel colored layer and the spacer colored layer, so that the black matrix has a step caused by the pixel colored layer and the spacer colored layer, it is likewise possible to reduce the step in the black matrix caused by the pixel colored layer and the spacer colored layer, and to suppress the occurrence of liquid crystal alignment disorder in the vicinity of the stack spacers.

In Embodiments 1 and 2, configurations have been explained in which a wide portion of the black matrix projects in one direction, i.e. configurations in which there is only one projection. However, the wide portion may project in a plurality of directions, and there may be provided a plurality of projections. Fig. 5 is a plan-view schematic diagram illustrating another color filter substrate of Embodiment 2. In Fig. 5, already-explained members are denoted with the same reference numerals as above, and an explanation thereof will be omitted. The region demarcated by a broken line if Fig. 5 denotes a region that is shielded from light by a light-shielding member provided in the TFT substrate. As illustrated in Fig. 5, the black matrix 12 has a projection 12c that projects from the opposite side of the projection 12b. In such an embodiment, there may be used, as a base of the stack spacer 25, the pixel colored layer (pixel colored layer (red) 13R in Embodiment 2) that is in contact with the projection 12c (wide portion having a shorter contour line), which is smaller than the projection 12b, and not the pixel colored layer (pixel colored layer (blue) 13B in Embodiment 2) that is in contact with the projection 12b having a greater projecting extent (wide portion having a longer contour line).

Instead of the columnar portion 14 in the stack spacers 15, 25 and 35 of Embodiments 1 to 3 there may be formed, through stacking, an island-like spacer colored layer independent from the pixel colored layer (red) 13R, the pixel colored layer (green) 13G and the pixel colored layer (blue) 13B, by using a colored layer material identical to that of any of the pixel colored layer (red) 13R, the pixel colored layer (green) 13G and the pixel colored layer (blue) 13B.

The present claims priority, under the Paris convention and the laws of national-phase countries, for Japanese Patent Application No. 2008-183637 filed on July 15, 2008, the entire contents whereof are incorporated herein by reference.

## Claims

1. A color filter substrate comprising a first pixel colored layer, a light-shielding layer and a second pixel colored layer that are disposed side by side on a substrate,
wherein the light-shielding layer includes a first wide portion and is disposed so as to partially overlap edges of the first pixel colored layer and the second pixel colored layer,
the first wide portion includes a projection that projects towards the first pixel colored layer,
the color filter substrate includes a first stack spacer including the first wide portion and a first spacer colored layer, and
the first spacer colored layer includes the same color as the first pixel colored layer and is joined to the first pixel colored layer only at a root of the projection.

2. The color filter substrate according to claim 1, wherein the color filter substrate is not provided with an overcoat layer that covers the first pixel colored layer, the light-shielding layer and the second pixel colored layer.

3. The color filter substrate according to claim 1 or 2,
wherein the light-shielding layer contains a resin.

4. The color filter substrate according to any one of claims 1 to 3,
wherein the edges of the first pixel colored layer and the second pixel colored layer are disposed on the light-shielding layer, and each of the first pixel colored layer and the second pixel colored layer have a step caused by the light-shielding layer.

5. The color filter substrate according to any one of claims 1 to 3,
wherein the light-shielding layer has edges respectively disposed on the first pixel colored layer and the second pixel colored layer, and has steps respectively caused by the first pixel colored layer and the second pixel colored layer.

6. A liquid crystal display device, comprising:
the color filter substrate according to any one of claims 1 to 5;
an opposed substrate facing the color filter substrate; and
a liquid crystal layer sandwiched between the color filter substrate and the opposed substrate.

7. The liquid crystal display device according to claim 6,
wherein the liquid crystal display device is of twisted nematic mode.

8. A color filter substrate comprising a first pixel colored layer, a light-shielding layer and a second pixel colored layer that are disposed side by side on a substrate,
wherein the light-shielding layer has at least a second wide portion projecting towards the first pixel colored layer, and is disposed so as to partially overlap edges of the first pixel colored layer and the second pixel colored layer,
the color filter substrate has a second stack spacer including the second wide portion and a second spacer colored layer,
a contour line of the second wide portion on a side of the second pixel colored layer is shorter than a contour line of the second wide portion on a side of the first pixel colored layer, and
the second spacer colored layer has the same color as the second pixel colored layer and is joined to the second pixel colored layer.

9. A liquid crystal display device, comprising:
the color filter substrate according to claim 8;
an opposed substrate facing the color filter substrate; and
a liquid crystal layer sandwiched between the color filter substrate and the opposed substrate,
wherein the opposed substrate has a light-shielding member at a region at which the second spacer colored layer and the light-shielding layer of the color filter substrate overlap each other in a plan view.

10. A color filter substrate comprising a pixel colored layer and a island-like light-shielding layer that is surrounded by the pixel colored layer are disposed side by side on a substrate,
wherein edges of the light-shielding layer and the pixel colored layer overlap each other,
the color filter substrate has a third stack spacer including the light-shielding layer and a third spacer colored layer, and
the third spacer colored layer includes the same color as the pixel colored layer and is provided spaced apart from the pixel colored layer.
